# EUROPEAN PATENT APPLICATION

(11) **EP 4 751 877 A2**
(43) Date of publication of application: **03.06.2026**
(21) Application number: 26171051.1
(22) Date of filing: 24.09.2024
(51) Int. Cl.: B29C 49/24

(54) **DUAL PIPE MANUFACTURING CELL**

(30) Priority: 25.09.2023 US 202363584984 P
(62) Divisional of application: 24787317.7
(71) Applicant: Advanced Drainage Systems, Inc., Hilliard, OH 43026 (US)
(72) Inventor: MOORE, Roy E. Jr., Hilliard, 43026 (US); SWISTAK, Dan, Hilliard, 43026 (US); MILLER, Adam, Hilliard, 43026 (US); KOLBET, Randy, Hilliard, 43026 (US); COPPES, Bryan, Hilliard, 43026 (US); FRAZIER, Jeremy, Hilliard, 43026 (US)
(74) Representative: Finnegan Europe LLP

(57) **Abstract**

A corrugated pipe manufacturing cell is configured to produce multiple corrugated pipes in parallel. The manufacturing cell may comprise an extrusion system that is capable of providing multiple independently regulated flows of plastic piping material to multiple die heads. The multiple die heads may feed a set of mold blocks having dual cavities for forming he multiple corrugated pipes. The pipe manufacturing cell may be converted between a first mode for producing large diameter single corrugated pipes, and a second mode for producing smaller diameter, plural corrugated pipes.

## Description

### CROSS-REFERENCE TO RELATED APPLICATIONS

This disclosure claims priority to U.S. Provisional Application No. 63/584,984, titled "Dual Pipe Manufacturing Cell," filed September 25, 2023, which is incorporated herein by reference in its entirety.

### TECHNICAL FIELD

This disclosure relates generally to the field of continuous extrusion blow molding corrugated pipe manufacturing systems. More particularly, and without limitation, the present disclosure relates to innovations in simultaneous dual pipe extrusion and corrugation systems.

### BACKGROUND

Drainage pipe has long been used for transporting water in various agricultural, residential, civil engineering, and other construction applications. For example, drainage pipe has been used, e.g., in main trunk septic systems, or to create storm water systems configured to collect and dispose of water "run-off" Traditionally, drainage pipe was made from clay or concrete, which caused the pipe to be heavy, expensive, and brittle. To improve the ease-of-installation, cost-effectiveness, and durability of drainage pipes, pipes are now often manufactured from alternative materials, including various polymers and polymer blends.

Methods of manufacturing corrugated polymer pipe may include, e.g., single-wall, double-wall, and triple-wall methods. For example, in a single-wall method, a melted polymer may be fed through a pipe extruder into a die. The die may include one or more channels configured to evenly distribute the polymer to the inner surfaces of a series of corrugated mold blocks within a pipe corrugator. The melted polymer may be adhered to the inner surfaces of the mold by, e.g., blown air from within the die, vacuum suction from the mold blocks, or a combination of the two. The corrugator may form the polymer into a corrugated pipe shape, cool it into a hardened structure via internal or external cooling channels, and feed the formed pipe to further downstream stations in a pipe manufacturing cell.

Manufacturing double-walled pipe may involve steps that are similar to the single-wall process described above. However, a die may include additional channels for extruding a smooth-walled interior pipe layer that may be bonded to the corrugated exterior. The interior layer may be fed by the same extruder or a separate extruder configured to produce desired properties such as, e.g., wall thickness, material composition, etc. Large diameter corrugated pipes typically include a double-walled construction. Further, one or more walls of a pipe may comprise several coextruded layers of material. For example, a multi-layered co-extrusion die may comprise further inlets configured to feed the same or different materials to multiple distinct layers of a pipe. These layers may be simultaneously extruded into a multi-layered wall, with each layer being optimized for specific desired chemical, mechanical, or other properties.

One issue facing manufacturers of corrugated pipe is that manufacturing cells for particularly large diameter pipes (such as, e.g., 30 to 60 inches in diameter) may occupy a great deal of installation space in a production facility regardless of how frequently the manufacturing cells are in use. For example, some manufacturing cells may run 24 hours per day, seven days per week, while others may be operating less than 50% of the time. Demand for 30 to 60 inch pipes may be neither as high, nor as consistent, as smaller pipes in the medium diameter range such as, e.g., 12 to 30 inches. Meanwhile, times of peak demand for medium diameter pipe may call for more manufacturing cells in the 12 to 30 inch range than are available. The result is an inefficient use of floor space in a production facility. Increasing the total footprint and equipment of the production facility may allow any amount of demand to be met. But increasing the total footprint comes with a significant increase in costs, and it does nothing to improve overall efficiency by reducing the idle time of larger manufacturing cells.

### SUMMARY

Some embodiments of the present disclosure provide systems and methods for modifying a large pipe manufacturing cell so that it may be used to produce two pipes of a smaller diameter simultaneously. For example, a manufacturing cell capable of producing a single 60-inch double-walled pipe may be reconfigured as needed to produce, e.g., two 24-inch double-walled pipes in parallel. Some embodiments of the present disclosure provide systems and methods for overcoming challenges related to such a configuration. For example, some embodiments of the present disclosure may provide systems and methods for reliably diverting controlled flows of thermoset or thermoplastic material to multiple pipe dies, using an extrusion system that may be originally designed for feeding a single larger pipe die.

For example, in some embodiments, the apparatus may comprise an extrusion system for feeding thermoset or thermoplastic material to a corrugator. The extrusion system may comprise a first extruder, a second extruder, a first pipe die head and a second pipe die head. Each of the first and second pipe die heads may be configured to generate the material feeds to produce first and second double-walled corrugated pipes.

In some embodiments, the first extruder may comprise a first melt pump and a second melt pump arranged at its outlet side. Each of the first melt pump and the second melt pump may be coupled to a first flow tube and a second flow tube, respectively. The first extruder may be connected to a first inner pipe die inlet of the first pipe die head by the first melt pump and the first flow tube. The first extruder may be connected to a second inner pipe die inlet of the second pipe die head by the second melt pump and the second flow tube.

In some embodiments, the second extruder may comprise a third melt pump and a fourth melt pump arranged at its outlet side. Each of the third melt pump and the fourth melt pump may be coupled to a third flow tube and a fourth flow tube, respectively. The second extruder may be connected to a first outer pipe die inlet of the first pipe die head by the third melt pump and the third flow tube. The second extruder may be connected to a second outer pipe die inlet of the second pipe die head by the fourth melt pump and the fourth flow tube.

In some embodiments, the apparatus may further comprise a dual-pipe corrugator. The dual pipe corrugator may comprise a plurality of mold blocks. Each mold block may comprise a first cavity having a first corrugated molding surface, and a second cavity having a second corrugated molding surface configured to receive a material flow from the first die and the second die, respectively. The plurality of mold blocks may be configured to simultaneously produce two double-walled corrugated pipes in parallel.

Some embodiments of the present disclosure may provide a pipe manufacturing cell. The pipe manufacturing cell may comprise: an extrusion system; a corrugator comprising a plurality of multi-pipe mold blocks, each multi-pipe mold block comprising a first cavity having a first corrugated molding surface and a second cavity having a second corrugated molding surface; a first pipe die head coupled to the extrusion system and configured to provide a first flow of pipe material to the first cavities of the plurality of mold blocks; and a second pipe die head coupled to the extrusion system and configured to provide a second flow of pipe material to the second cavities of the plurality of mold blocks. The first pipe die head and the second pipe die head may be configured to provide the first and second flows of pipe material simultaneously.

Some embodiments of the present disclosure may provide a pipe manufacturing method. The method may comprise: providing a flow of pipe material from an extrusion system to a corrugator, the corrugator comprising a plurality of single-pipe mold blocks, each of the plurality of single-pipe mold blocks comprising a corrugated mold surface; corrugating a pipe by the corrugator using the plurality of single-pipe mold blocks; replacing the plurality of single-pipe mold blocks with a plurality of multi-pipe mold blocks in the corrugator, each of the plurality of multi-pipe mold blocks comprising a plurality of corrugated mold surfaces; modifying the extrusion system to divide the flow of pipe material; providing the divided flow of pipe material to the plurality of corrugated mold surfaces of the multi-pipe mold blocks; and corrugating a plurality of pipes by the corrugator using the plurality of multi-pipe mold blocks.

### BRIEF DESCRIPTIONS OF FIGURES

**Figures 1A-C** are schematic diagrams illustrating an example of a pipe manufacturing cell, according to a comparative examples.
**Figures 2A-E** are schematic diagrams illustrating an example of a pipe manufacturing cell, consistent with embodiments of the present disclosure.
**Figures 3A-B** are schematic diagrams illustrating an example of a pipe manufacturing cell, consistent with embodiments of the present disclosure.
**Figures 4A-H** are schematic diagrams illustrating various pipe corrugator mold blocks, consistent with embodiments of the present disclosure.
**Figure 5** is a schematic diagram illustrating an example die stand of a pipe manufacturing cell, consistent with embodiments of the present disclosure.
**Figure 6** is a process flowchart illustrating an example of a pipe manufacturing method, consistent with embodiments of the present disclosure.

### DETAILED DESCRIPTION

Reference will now be made in detail to the example embodiments described above and illustrated in the accompanying drawings.

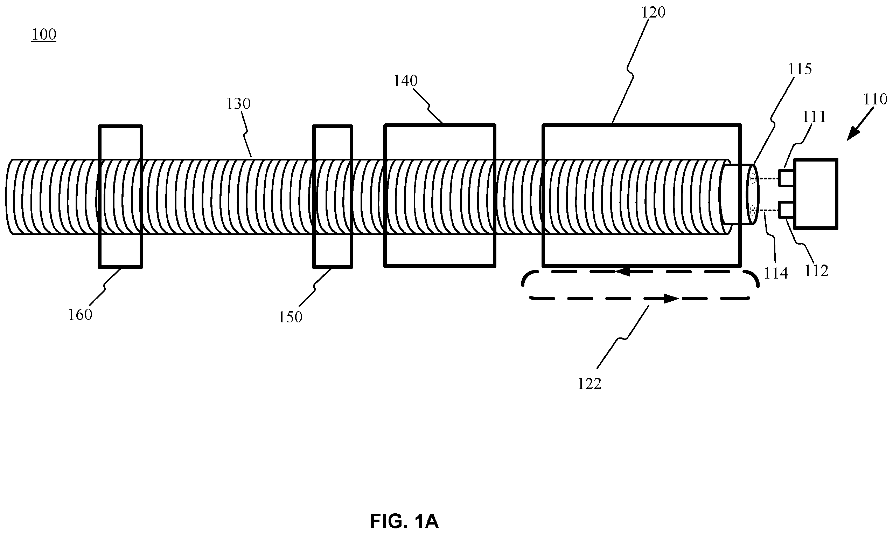

**Figs. 1A-C** illustrate a single pipe manufacturing cell 100, according to comparative examples. Pipe manufacturing cell 100 may be configured to produce, e.g., a large diameter double-walled corrugated pipe 130. For example, a diameter of pipe 130 may be in the range of, e.g., 30 to 60 inches. The double-walled corrugated pipe 130 may comprise a smooth inner wall and a corrugated outer wall. For example, the corrugated outer wall may comprise a series of repeating peaks and valleys when viewed in cross-section. Pipe 130 may comprise a moldable resilient material. Such moldable resilient material may include various moldable polymers, rubbers, plastics, polypropylene (PP), polyethylene (PE), polyurethane (PU), polyvinyl chloride (PVC), etc. For example, pipe 130 may comprise a polyethylene material such as, e.g., high-density polyethylene (HDPE), a polypropylene material such as high-performance polypropylene (HP), or a polyvinyl chloride material such as solid wall or foam core PVC.

Pipe manufacturing cell 100 may comprise an extrusion system 110 having one or more extruders 111, 112, one or more flow tubes 114, pipe die 115 (also referred to as a die head), corrugator 120, water cooling chamber 140, water blow-off chamber 150, and cutting station 160.

Extrusion system 110 may be configured to provide a flow of pipe material into pipe die 115 by way of one or more extruders 111, 112. For example, as discussed further below, a first extruder 111 may provide a first flow of pipe material into a first inlet 117 of pipe die 115, and a second extruder 112 may provide a second flow of pipe material into a second inlet 118 of pipe die 115. Flow tubes 114 or other connections may be provided to deliver the flows of pipe material from the extruders 111, 112 to the inlets 117, 118 of pipe die 115. The first inlet 117 may comprise a channel configured to extrude the first flow of pipe material into a first tubular shape as an inner wall of pipe 130 at an outlet side of pipe die 115. Therefore, first inlet 117 may be referred to as an inner pipe die inlet or an inner wall inlet. The second inlet 118 may comprise a further channel configured to extrude the second flow of pipe material into a second tubular shape as an outer wall of pipe 130 at an outlet side of pipe die 115. Therefore, second inlet 118 may be referred to as an outer pipe die inlet or an outer wall inlet. The inner and outer tubular-shaped pipe material may be formed into a double-walled corrugated pipe 130 by corrugator 120 as discussed below.

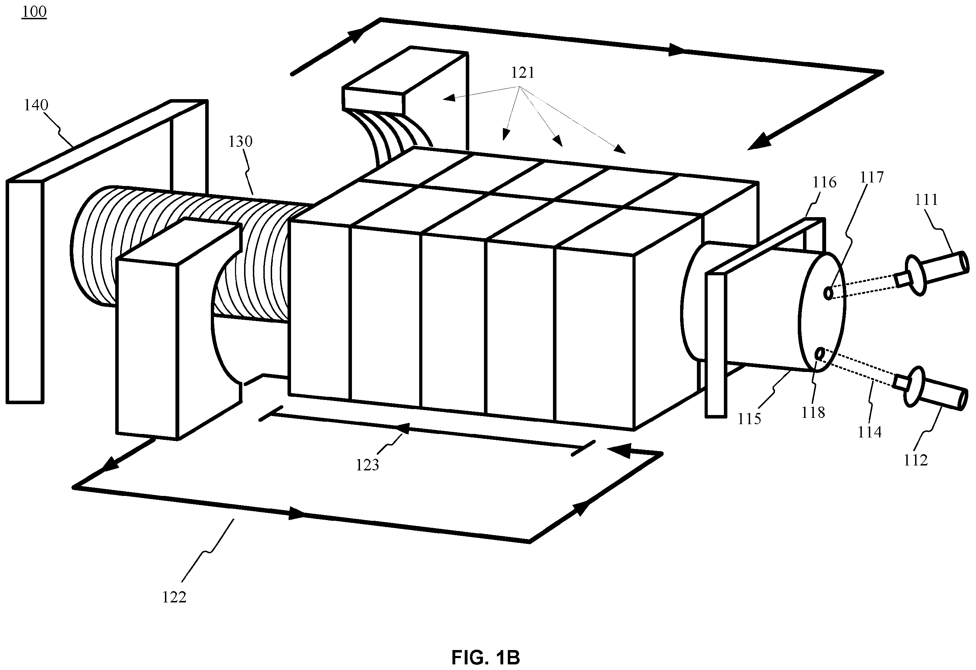

As seen at **Fig. 1B****,** corrugator 120 may comprise a plurality of mold blocks 121 and a conveyance system 122 configured to continuously revolve the mold blocks 121 in a loop along a direction shown by the arrows. Conveyance system 122 may comprise, e.g., a track or other conveyor as schematically illustrated in **Figs. 1A-B** and understood by a person having ordinary skill in the art. Each mold block may comprise one half of a pair of right- and left-handed mold blocks that may be joined together to form a corrugated molding surface on the exterior of pipe 130. The speed at which right-handed and left-handed mold blocks 121 are moved along their respective conveyance systems 122 is substantially identical. In this way, each pair of cooperating mold blocks 121 is aligned and contiguously arranged as they enter a molding zone 123 along conveyance system 122. Die head 115 may be supported at the start of molding zone 123 by, e.g., a die stand 116. Each pair of mold blocks 121 may converge at an outlet side of die head 115 as they enter the molding zone to form a corrugated surface on an exterior of the extruded tubular-shaped pipe material exiting die head 115. The exterior surface of the pipes may be adhered to the inner molding surfaces of the mold blocks 121 by, e.g., blown air supplied from die head 115, vacuum suction from the mold blocks 121, or a combination of the two. As the mold blocks 121 are brought together, they may continue to move along mold zone 123 of conveyance system 122 in a direction away from die head 115 along with their respective sections of piping. As the mold blocks move in formation along mold zone 123, they may support the piping material as it cools into a hardened or semi-hardened structure. For example, mold blocks 121 may comprise internal cooling channels for cooling pipe 130. As the mold blocks 121 exit the mold zone 123, they may separate from each other to release the hardened section of pipe 130. Mold blocks 121 may then continue along conveyance system 122 to repeat the process. The hardened corrugated pipe 130 may continue on to further downstream processing stations.

For example, returning to **Fig. 1A****,** pipe 130 may then be further cooled at water cooling chamber 140. Water may be blown off the pipe at water blow-off chamber 150 before being cut to a desired length at cutting station 160. In general, pipe 130 may be processed as desired for its intended use, and pipe manufacturing cell 100 may comprise any known stations or components to perform such processing. Such stations may be arranged before, after, or in lieu of any of the disclosed stations. For example, pipe 130 may be cut to length, and holes, slits or other perforations may be added, etc. Optional post-processing steps for conventional corrugated pipes are described in one or more of U.S. Pat. Nos. 10,612,698; 10,550,963; 10,077,856; 10,077,857; 9,958,091; 9,759,354; 3,916,763; 4,003,685, 3,919,367; 3,941,639; 3,990,8273,910,713; 3,919,367; 3,877.831; 3,864,446; 3,784.346; 3,792,941; 3,799,418; 3,831,470; 3,843,758; 3,854,527; 3,870,774; and 3,891,733. Each of these patents is hereby incorporated by reference in its entirety.

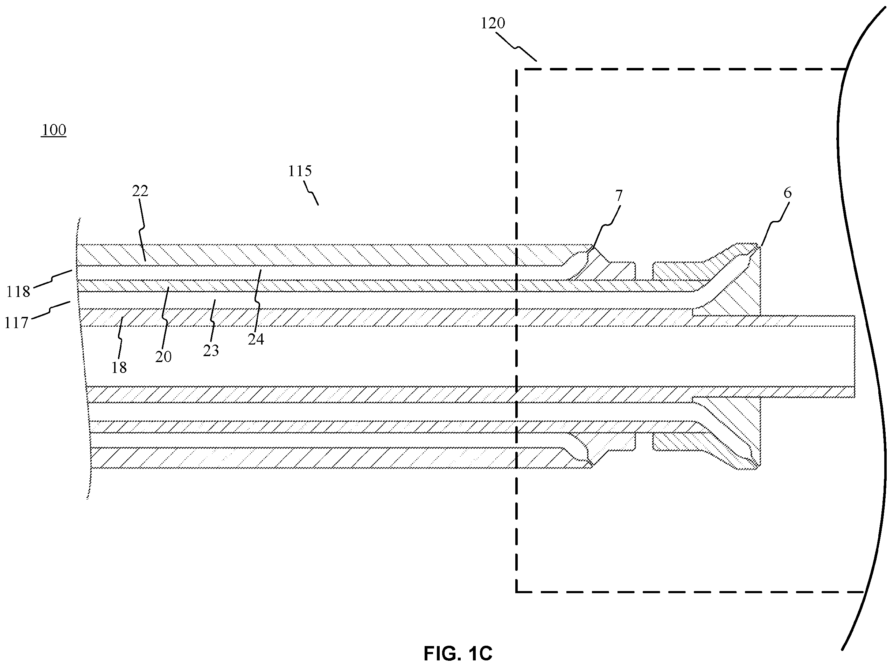

**Fig. 1C** illustrates an example multi-wall pipe die head 115 that may be employed in, e.g., pipe manufacturing cell 100 of **Figs. 1A-B.** Pipe die head 115 may comprise first inlet 117 provided between an inner tube 18 and a middle tube 20 of the pipe die head 115. A melted material, such as, for example, a melted high density polyethylene, may be introduced into the first inlet 117 from an extruder, such as first extruder 111 of **Figs. 1A-B.** The melted material may travel through first passageway 23 to a first nozzle outlet 6. The melted material may be ejected from first nozzle outlet 6 in a substantially tubular shape into a corrugator, such as corrugator 120 of **Figs. 1A-B,** to form an inner wall of a multi-wall corrugated pipe. Pipe die head 115 may further comprise a second inlet 118 provided between middle tube 20 and outer tube 22 of pipe die head 115. A further melted material may be introduced into second inlet 118 from an extruder, such as second extruder 112 of **Figs. 1A-B.** The further melted material may travel through second passageway 24 to a second nozzle outlet 7. The melted material may be ejected from second nozzle outlet 7 in a substantially tubular shape into the corrugator to form an outer wall of the multi-wall corrugated pipe.

In some embodiments of the comparative examples of **Figs. 1A-C,** pipe die head 115 may comprise a multi-layered co-extrusion die having further inlets, passageways, tubes or nozzle outlets for producing additional walls or multi-layered walls. In some embodiments, pipe die head 115 may comprise divided passageways configured to distribute a single material flow to multiple nozzle outlets. For example, in some embodiments a single extruder may provide a single material flow to pipe die head 115. Pipe die head 115 may then internally divide and distribute the material flow to, e.g., first passageway 23 and second passageway 24. In some embodiments, additional tubes may be provided to convey other components or utilities. For example, in some embodiments, middle tube 20 may comprise two separate tubes with an air gap between them. This air gap may be utilized as a pathway for, e.g., air, or wiring for heaters, thermocouples, or other components. In some embodiments, pipe manufacturing cell 100 may comprise further extruders configured to distribute melted material to the further inlets. In addition, in some embodiments pipe die head 115 may comprise fewer inlets, passageways, tubes or nozzle outlets. For example, in some embodiments, pipe die head 115 may be configured to produce, e.g., a single-wall pipe, and pipe manufacturing cell 100 may comprise a single extruder. Further details of pipe die heads may be found in one or more of U.S. Pat. Nos. 7,980,841 and 8,496,460. Each of these patents is hereby incorporated by reference in its entirety.

To achieve these various processing steps, manufacturing cells may require large amounts of floor space in a manufacturing facility. A problem exists in that the largest classes of pipe manufacturing cells, which occupy the most space, may have poor utilization compared to smaller pipe manufacturing cells. As discussed above, demand for large pipes having, e.g., diameters of 30 to 60 inches or more may not be as high or as consistent as demand for small to medium sized pipes having diameters of, e.g., 12 to 30 inches.

Embodiments of the present disclosure provide pipe manufacturing systems and methods for producing two corrugated pipes simultaneously. Dual pipe manufacturing cells according to some embodiments of the present disclosure may be adapted from single pipe manufacturing cells by replacing certain components such as, e.g., mold blocks, die heads, and certain components of an extrusion system. For example, a manufacturing cell capable of producing a single large double-walled pipe may be reconfigured as needed to produce, e.g., two medium sized double-walled pipes in parallel. In this way, floor space within a manufacturing facility may be used more efficiently.

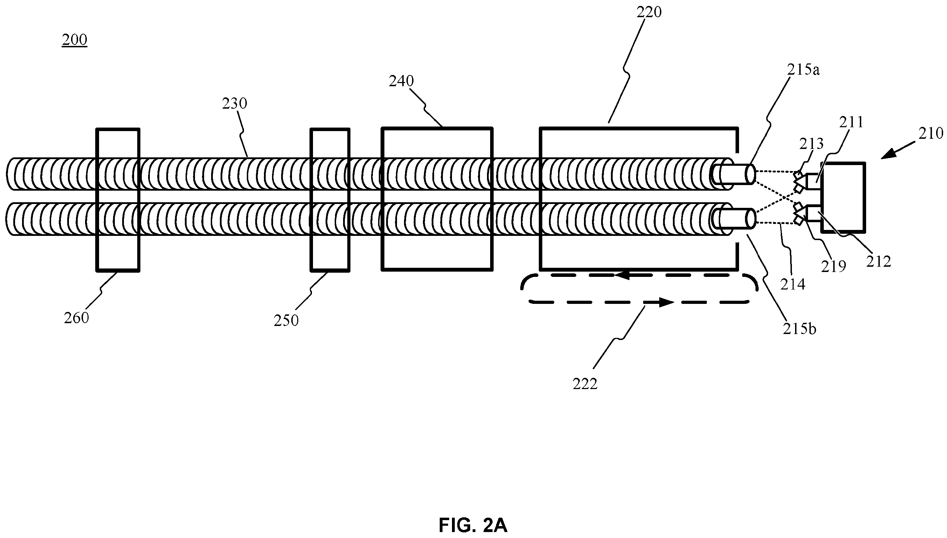

**Figs. 2A-B** are schematic diagrams illustrating an example of a pipe manufacturing cell 200, consistent with embodiments of the present disclosure. Pipe manufacturing cell 200 may include, for example, extrusion system 210 having one or more extruders, such as first extruder 211 and second extruder 212, flow dividers 219 coupled to one or more of the extruders, a plurality of flow tubes 214, a plurality of die heads 215, such as a first (upper) die head 215a and a second (lower) die head 215b, corrugator 220, water cooling chamber 240, water blow-off chamber 250, and cutting station 260. Pipe manufacturing cell 200 may also include a plurality of flow regulating mechanisms 213 coupled to each extruder by a flow divider.

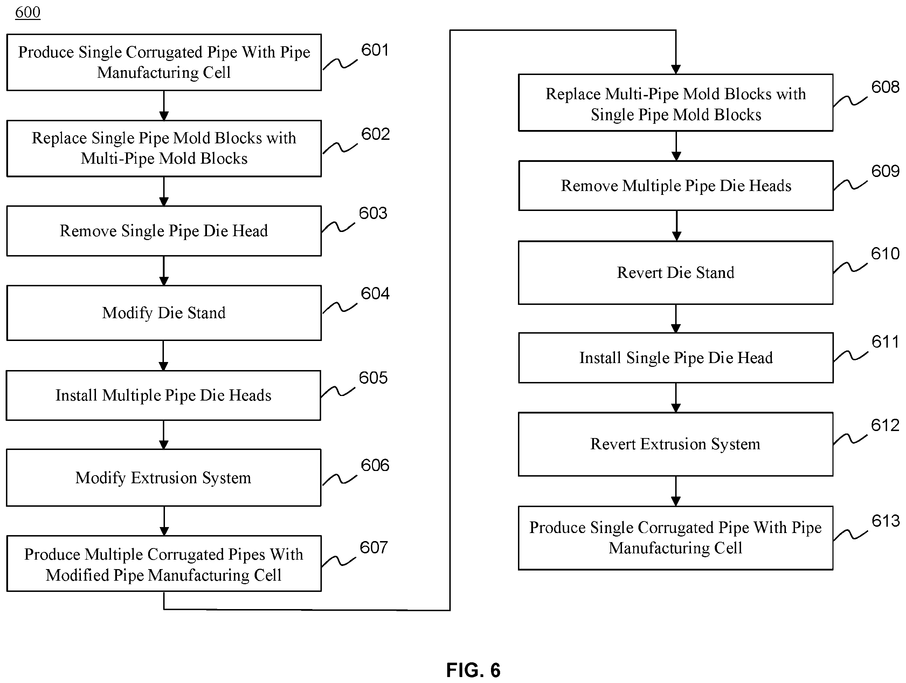

Pipe manufacturing cell 200 may be similar to pipe manufacturing cell 100 of **Figs. 1A-C** with certain differences disclosed herein. Elements in pipe manufacturing cell 200 that correspond to elements in comparative pipe manufacturing cell 100 may be represented by like numerals increased by 100. For example, water blow-off chamber 250 in some embodiments of **Figs. 2A-B** may roughly correspond to water blow-off chamber 150 of **Figs. 1A-B.** Therefore, a detailed discussion of certain elements in pipe manufacturing cell 200 may be omitted here. However, it should be understood that such omissions do not necessarily mean that an element within pipe manufacturing cell 200 is identical to its counterpart in the comparative examples of pipe manufacturing cell 100. For example, cutting station 260 may be optimized for cutting two pipes simultaneously, or it may comprise other differences or modifications from cutting station 160 that would allow it to function satisfactorily on both single and dual pipe manufacturing cells. The same may be true for, e.g., die stand 216, conveyance system 222, water cooling chamber 240, water blow-off chamber 250, and other components of the present disclosure. In some embodiments, such components may be sized and otherwise configured to accommodate both single and dual pipe configurations. For example, in some embodiments, a conveyance system may be configured to transport both single-type larger diameter mold blocks 121 and dual-type medium diameter mold blocks 221. Further, as discussed below with respect to **Fig. 6****,** die stand 216 may be optimized for supporting two pipe dies, such as by allowing for upper die head 215a and lower die head 215b to be independently aligned with their respective cavities in mold blocks 221.

As seen in **Figs. 2A-B,** pipe manufacturing cell 200 may be configured to feed multiple flows of pipe material to multiple inlets of multiples dies 215 to corrugate multiple pipes 230 in parallel. Pipe manufacturing cell 200 may be configured to divide controlled flows of pipe material to multiple pipe die heads 215 using an extrusion system 210. In some embodiments, extrusion system 210 may have been originally designed for feeding a single larger pipe die, or may be convertible between single and dual pipe manufacturing configurations.

For example, extrusion system 210 may include a first extruder 211 and a second extruder 212. Each of the first and second extruders 211, 212 may include flow dividers 219 to divide their flows to multiple flow regulating mechanisms 213. In some embodiments, flow regulating mechanisms 213 may include melt pumps. A melt pump may include a conduit having a toothed gear assembly configured to precisely regulate the flow of melted plastic in order to reduce surging and back pressure variation in the extruder output. Melt pumps may include internal heaters, pressure and temperature sensors, and other systems for monitoring and regulating the flow. By configuring multiple (such as two) melt pumps at the output side of each of first extruder 211 and second extruder 212, the flows of pipe material to each inlet of upper die head 215a and lower die head 215b may be regulated independently.

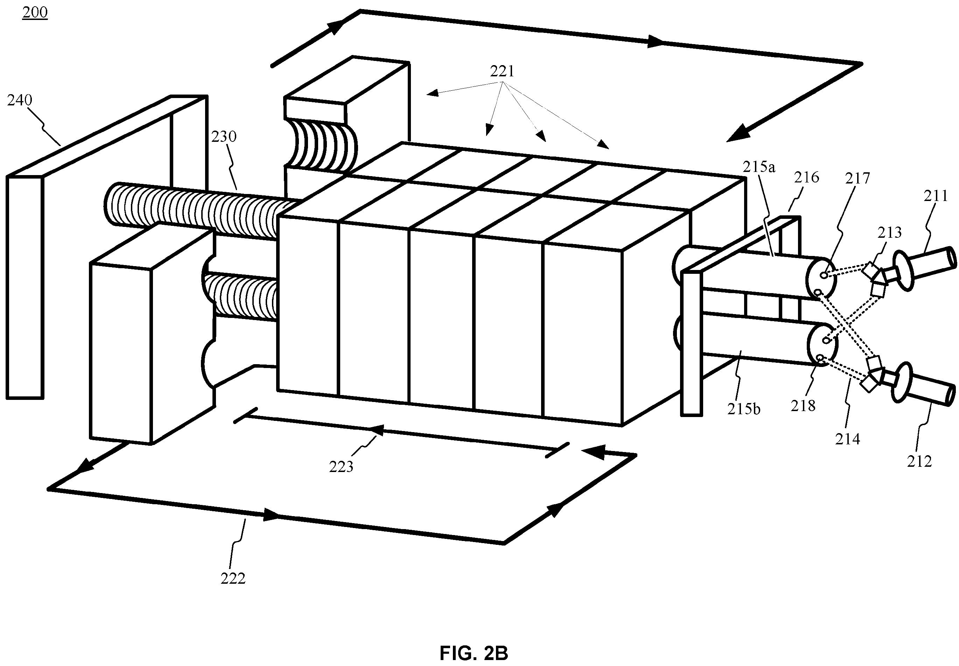

For example, as seen in **Fig. 2B****,** each of upper die head 215a and lower die head 215b may include an inner pipe die inlet 217 and an outer pipe die inlet 218. Flows of pipe material may be distributed from extrusion system 210 to the various inlets 217, 218 in a number of ways. As illustrated, first extruder 211 may supply pipe material to the inner pipe die inlets 217, while second extruder 212 supplies pipe material to the outer pipe die inlets 218. This configuration may be advantageous when the material properties or flow characteristics are significantly different between inner and outer pipe die inlets 217 and 218. For example, an inner pipe die inlet 217 may require a flow rate, temperature, or another parameter that is significantly different from that required by outer pipe die inlet 218. By dedicating one extruder to the inner pipe die inlets and one extruder to the outer pipe die inlets, independent control of the flow characteristics through each flow regulating mechanism 213 may be simplified. Further, inner pipe die inlets 217 and outer pipe die inlets 218 may have other requirements that cannot be regulated by a melt pump or other flow regulating mechanism 213, such as a different material composition.

Additionally, this flow-splitting arrangement may be advantageous when configuring a pipe manufacturing cell to be adaptable between single pipe and dual pipe production. For example, when first extruder 111 and second extruder 112 of **Fig. 1A** are configured for producing inner and outer walls, respectively, of a single corrugated pipe, the second extruder may be larger than the first. For this reason, an extruder that is designed for producing a single large outer wall may be repurposed for producing two medium outer walls, and an extruder that is designed for producing a single large inner wall may be repurposed for producing two medium inner walls.

Alternatively or additionally, in some embodiments first extruder 211 may supply flows to the inner and outer pipe die inlets 217, 218 of upper pipe die head 215a, and second extruder 212 may supply flows to the inner and outer pipe die inlets 217, 218 of lower pipe die head 215b. In some embodiments, a single extruder may be used with four melt pumps or other flow regulating mechanisms 213.

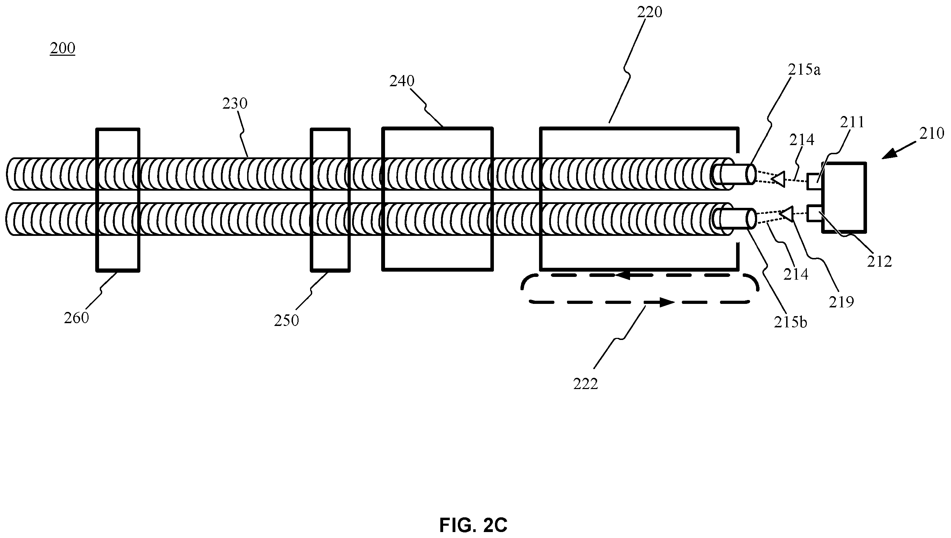

Further, in some embodiments, a separate flow regulating mechanism may not be needed between an extruder and pipe die inlets. For instance, in some embodiments, flow regulation may be achieved by the extruders themselves, or by the pipe die heads. Examples of such embodiments are discussed further with respect to **Figs. 2C-2E** below.

A plurality of pipe die heads 215, such as upper pipe die head 215a and lower pipe die head 215b, may be supported by a die stand 216. While upper and lower pipe die heads 215a, 215b are illustrated as separate components, in some embodiments they may be provided as a single integral unit. Upper and lower pipe die heads 215a, 215b may be arranged at a start of molding zone 223 to feed multiple inner and outer tubes of pipe material into corrugator 220.

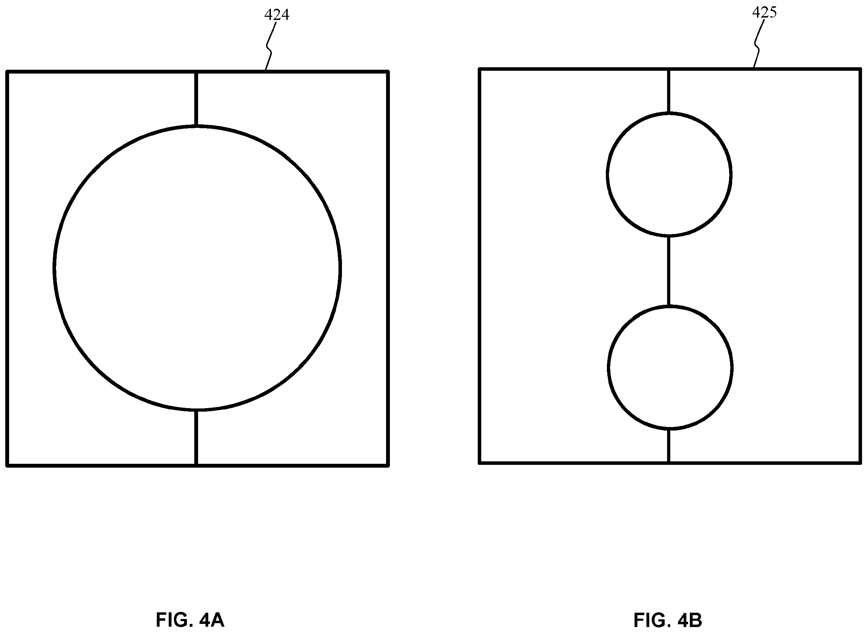

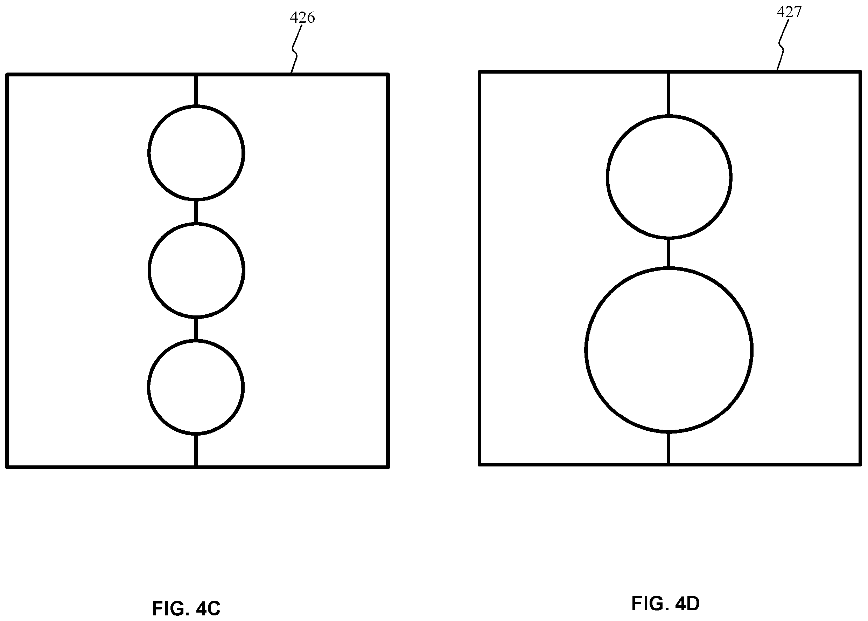

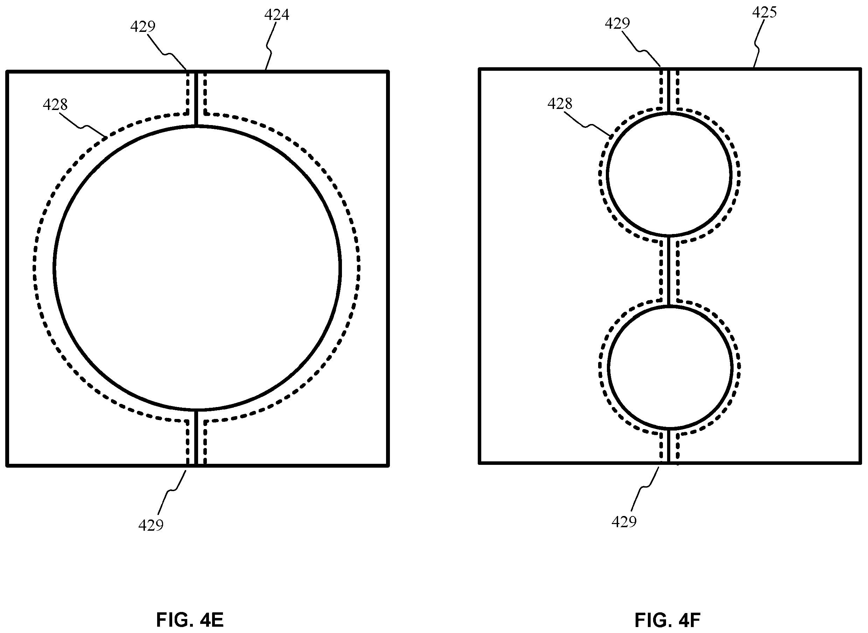

Corrugator 220 may comprise a plurality of multi-pipe mold blocks 221, as depicted in **Fig. 2B****.** Multi-pipe mold blocks 221 may comprise, e.g., dual pipe cavities with corrugated molding surfaces for producing two pipes in parallel. For example, the two pipes may have a same size, and multi-pipe mold blocks 221 may be configured, e.g., as blocks 425 of **Fig. 4B****.** Alternatively, the two pipes may have a different sizes, and multi-pipe mold blocks 221 may be configured, e.g., as blocks 427 of **Fig. 4D****.** Corrugator 220 and multi-pipe mold blocks 221 may function in a manner that is similar to what is described above with respect to single corrugator 120. For instance, pairs of multi-pipe blocks 221 may be converged upon the multiple pipe die heads at the start of a molding zone 223 by a conveyance system 222. Because the flows to each pipe die inlet are regulated precisely and independently, mold blocks 221 may be moved synchronously by the conveyance system without encountering formation errors in the individual pipes 230. Stated another way, the independent regulation of flow rates and other characteristics may allow each individual flow to be adapted to the motion of multi-pipe mold blocks 221 so that multiple pipes may be produced simultaneously.

While pipe die inlets 217 and 218 are discussed above with respect to producing inner walls and outer walls, respectively, embodiments of the present disclosure are not limited to this. For example, pipe die heads 215a and 215b may comprise more or fewer inlets, or may comprise multiple inlets dedicated to each wall of pipes 230. For instance, in some embodiments, pipe die heads 215a and 215b may comprise multi-layer dies having, e.g., multiple inner pipe die inlets 217 or multiple outer pipe die inlets 218. In this way, an individual wall of pipes 230 may be formed from multiple flows of material. In some embodiments, the flow of material to the multiple inlets may be divided and regulated as discussed above.

Further, while mold blocks 221 are illustrated as being divided in the vertical direction, it should be understood that other configurations are contemplated within embodiments of the present disclosure. For example, mold blocks 221 could alternatively be divided along, e.g., a horizontal direction, with the conveyance system 222, extrusion system 210, and related components adjusted accordingly.

In some embodiments, mold blocks 221 could be divided into more than two parts, e.g., three or four parts. For example, mold blocks 221 could be divided in both horizontal and vertical directions, with the conveyance system 222, extrusion system 210, and related components adjusted accordingly.

**Figs. 2C-2E** are schematic diagrams illustrating further examples of pipe manufacturing cell 200, consistent with embodiments of the present disclosure. As mentioned above, in some embodiments, material flow distribution may be achieved using more or fewer extruders than are illustrated in **Fig. 2A****,** or may be achieved with or without the use of dedicated flow regulating mechanisms 213 such as melt pumps, or by using flow dividers 219 that are located at positions other than an outlet side of the extruders. For example, As seen in **Fig. 2C****,** flow dividers 219 may be integral to flow tubes 214. For example, flow dividers 219 may comprise fittings or other mechanisms configured to receive flow from a single flow tube 214 and distribute the flow to multiple flow tubes 214. In this way, an extruder can be reconfigured from a single-pipe mode to a dual pipe mode simply by modifying or replacing its associated flow tubes 214.

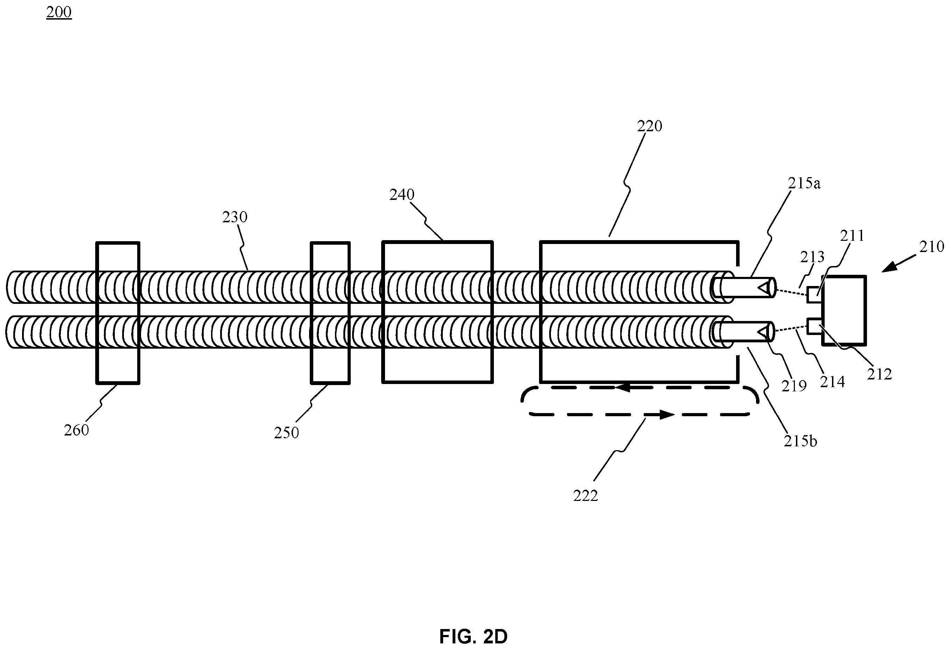

Further, as shown at **Fig. 2D** and as discussed above, a pipe die head may comprise divided passageways configured to distribute a single material flow to multiple nozzle outlets. For example, each of first pipe die head 215a or second pipe die head 215b may comprise an internal flow divider 219, such that a single inlet (or set of inlets) may receive a single material flow and divide the material flow to multiple walls or multiple outlets. In this way, when using the pipe manufacturing cell to manufacture a single large pipe, first extruder 211 may provide material flow for a first wall (such as an outer wall) of the single pipe, and second extruder 212 may provide material flow for a second wall (such as an inner wall) of the single pipe. Then, when reconfiguring the pipe manufacturing cell to manufacture two smaller pipes, first extruder 211 may, e.g., provide material flow for both the inner and outer walls of a first smaller pipe, and second extruder 212 may provide material flow for both the inner and outer walls of a second smaller pipe.

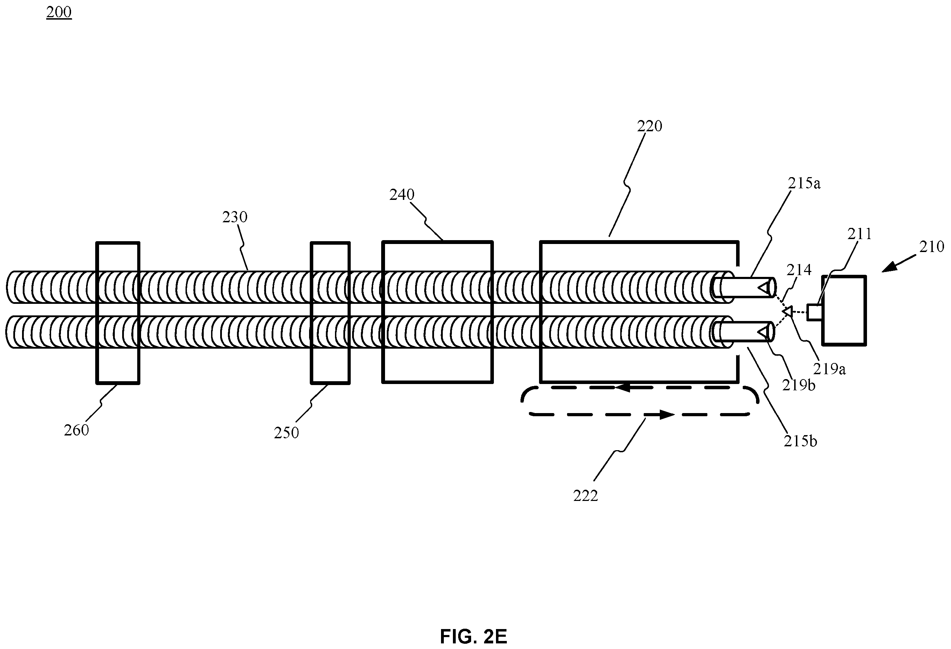

Further, as mentioned above, such configurations may be achieved using a single extruder. For example, as shown in **Fig. 2E****,** a single extruder 211 may provide a single material flow that may be divided to two different pipe die heads 215a and 215b at a first divider 219a. For example, first divider 219a may be located at an outlet side of the extruder 211 or, as shown in **Fig. 2E****,** may be integral with the flow tubes 214. Then second dividers 219b may be, e.g., internal flow dividers within pipe die heads 215a and 215b, or may also be integral with flow tubes 214.

Thus, embodiments of the present disclosure allow floor space in a pipe manufacturing facility to be efficiently utilized. In some embodiments, a single pipe manufacturing cell for large diameter pipes may be temporarily converted into a single pipe manufacturing cell for small or medium diameter pipes, such as by replacing mold blocks or modifying extrusion systems as discussed above.

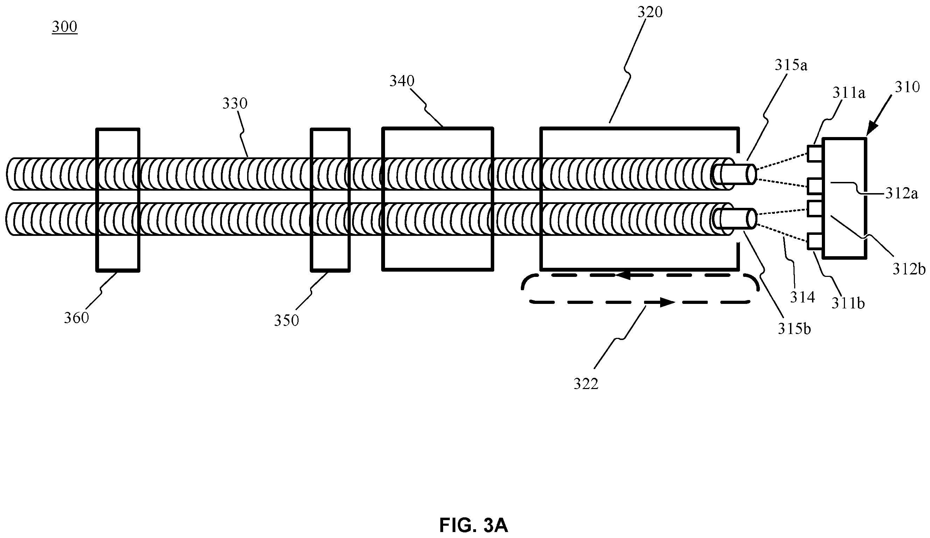

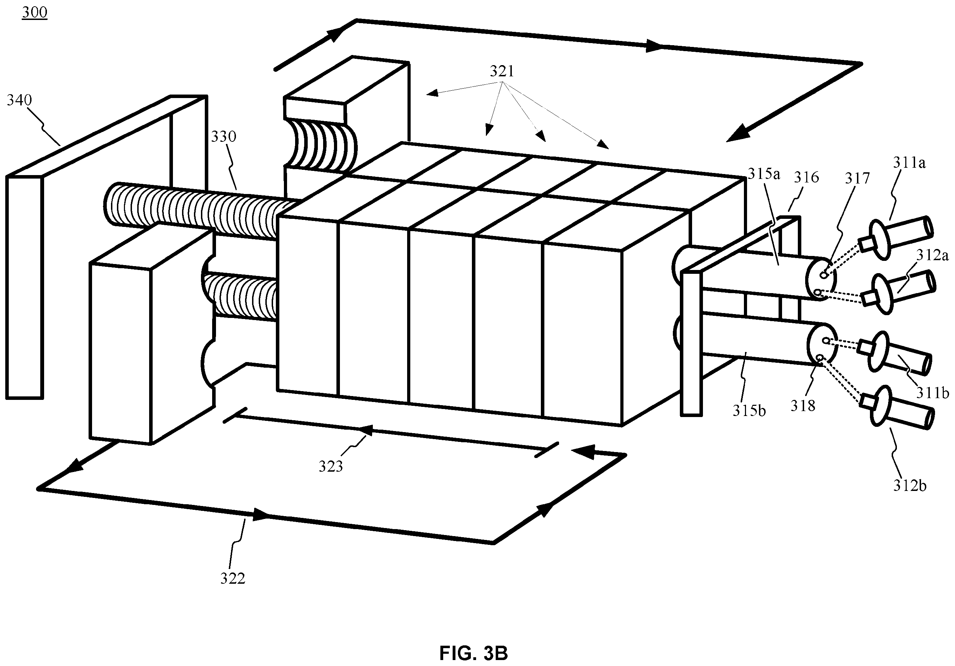

**Figs. 3A-B** are schematic diagrams illustrating an example of a pipe manufacturing cell 300, consistent with embodiments of the present disclosure. Pipe manufacturing cell 300 may be similar to pipe manufacturing cell 200 except as described below.

Alternatively, or in addition to the configurations discussed above, pipe manufacturing cell 300 may include a dedicated extruder for each pipe die inlet or each pipe wall. For example, pipe manufacturing cell 300 may comprise a first extruder 311a, a second extruder 312a, a third extruder 311b, and a fourth extruder 312b. First extruder 311a and third extruder 311b may direct flows of pipe material to inner pipe die inlets 317 of upper and lower pipe die heads 315a, 315b. Meanwhile second extruder 312a and fourth extruder 312b may direct flows of pipe material to outer pipe die inlets 318 of upper and lower pipe die heads 315a, 315b. Providing dedicated extruders to each inlet may provide even greater independent control over the material flows. In some embodiments, each dedicated extruder 311a, 311b, 312a, and 312b may comprise a flow regulating mechanism (not shown) such as a melt pump, as described above.

**Figs. 4A-F** are schematic diagrams illustrating various pipe corrugator mold blocks 424-427, respectively, consistent with embodiments of the present disclosure. **Fig. 4A** illustrates a pair of large diameter, single pipe mold blocks 424. For example, mold blocks 424 may be configured to produce a pipe having a diameter of, e.g., between 30 and 60 inches or more. **Fig. 4B** illustrates a pair of medium diameter, dual pipe mold blocks 425. For example, mold blocks 425 may be configured to produce two pipes each having a diameter of, e.g., between 12 and 30 inches. Each mold block 425 may comprise a first cavity having a first corrugated molding surface and a second cavity having a second corrugated molding surface. The first cavity and the second cavity may be, e.g., substantially semi-circular or generally correspond to one half of an outer contour of the pipe it is designed to produce. While the number and size of molding surfaces on an interior of the mold blocks 424 and 425 may differ, in some embodiments the total size and external shapes of mold blocks 424 and 425 may be substantially identical. Thus, the two pairs of mold blocks 424 and 425 may be compatible with the same conveyance system to enable easy conversion between them, thereby allowing a manufacturing facility to satisfy changing demands for various pipe sizes. Further, other mold block configurations may also be provided. For example, **Fig. 4C** illustrates a pair of small to medium sized triple mold blocks 426. For example, mold blocks 426 may be configured to produce three pipes each having a diameter of, e.g., between 6 and 24 inches. **Fig. 4D** illustrates a pair of dual size, dual mold blocks 427. For example, mold blocks 426 may be configured to produce two pipes, the first pipe having a first diameter and the second pipe having a second diameter different from the first. In general, any number of configurations may be achieved based on the principles disclosed above.

Further, cooling channels for any of the above mold blocks may be appropriately arranged within mold blocks of the present disclosure in order to achieve uniform cooling and hardening of each individual pipe. For example, as shown at **Figs. 4E-F,** single pipe mold blocks 424 or dual pipe mold blocks 425 may comprise cooling channels 428. Cooling channels 428 may be configured with ports 429 for supplying and recovering a cooling fluid to cool and harden the corrugated pipe.

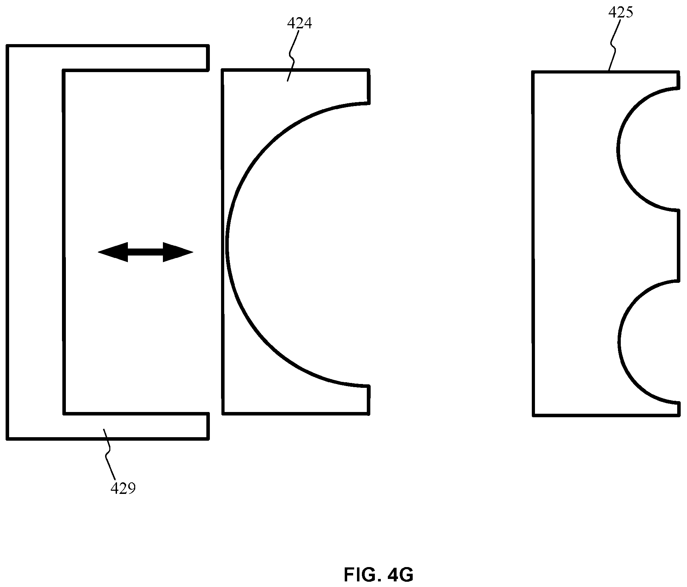

Additionally, mold blocks 424-427 may be configured as modular to enable a simpler change from one setup to another. For example, as seen in **Fig. 4G****,** single pipe mold blocks 424 and dual pipe mold blocks 425 may each be configured to be installed within a common block carrier 429. In some embodiments, common block carrier 429 may remain affixed to a conveyance system when changing between single and dual pipe modes. Further, cooling channels may be arranged to circulate within common block carrier similar to Figs. 4E-F. For example, the channels could circulate only through common block carrier 429, or they could include ports configured to mate with further cooling channels located within the mold blocks 424, 425.

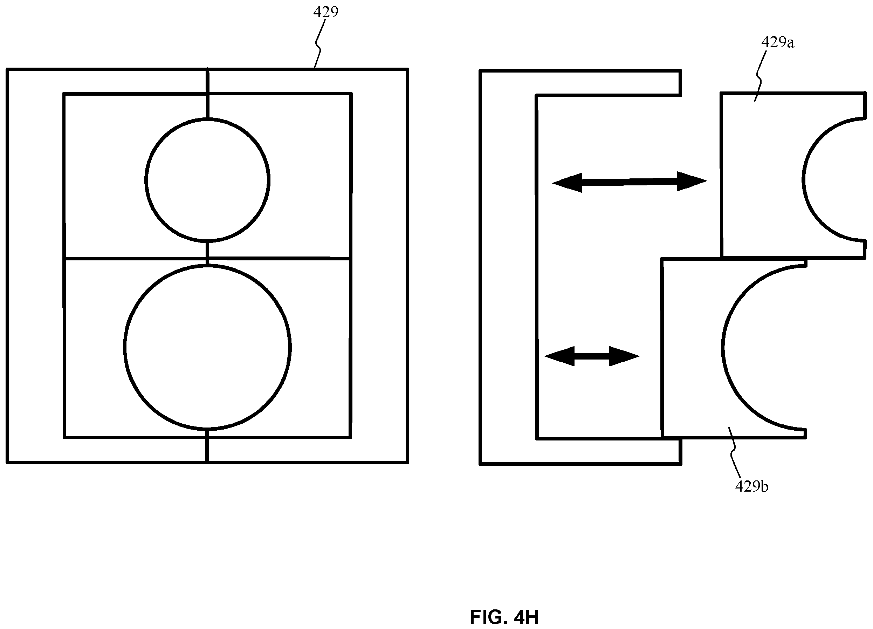

Further, as seen in **Fig. 4H****,** the modularity may allow for different size combinations to be used. For example, a single pipe mold block 424 may be substituted for two individual mold blocks 429a and 429b to allow for even greater flexibility in size configurations.

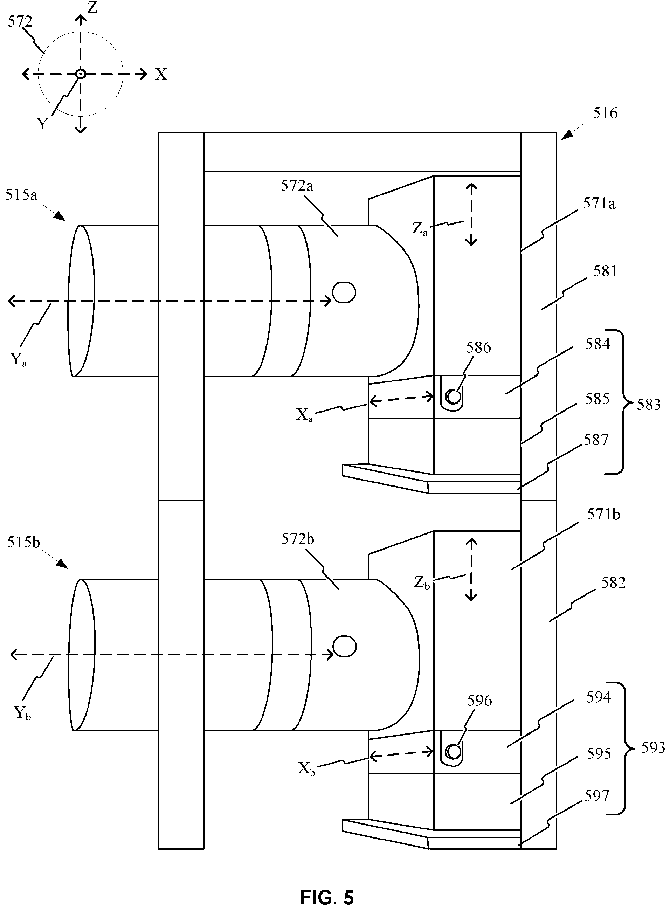

**Fig. 5** is a schematic diagram illustrating an example of a die stand 516 configured to support a plurality of pipe die heads 515 (such as upper pipe die head 515a or lower pipe die head 515b), consistent with embodiments of the present disclosure. Pipe die heads 515 and die stand 516 may be used in any of the embodiments discussed above. To ensure that melted pipe material is evenly distributed when the parison is extruded from the pipe die heads 515 into their respective mold block cavities (not shown), each of the pipe die heads 515 must be properly aligned with their respective cavities in the mold blocks. Accordingly, die stand 516 may be configured to independently adjust the alignment of upper pipe die head 515a and lower pipe die head 515b. In this context, "alignment" may refer to a longitudinal axis of a pipe die head 515 being concentric, on center and parallel to a centerline of a mold cavity tunnel, as further discussed below.

In this context, "independent" alignment may refer to the ability to change the relative positions or orientations of two or more pipe die heads with respect to each other, but it does not necessarily mean that the actuation systems used for moving each of the pipe die heads are fully decoupled from one another. For example, in some embodiments the upper pipe die head 515a may be stacked upon, or otherwise supported by, lower pipe die head 515b such that movement of lower pipe die head 515b (for example, movement with respect to a floor or a frame 581 of die stand 516) will cause upper pipe die head 515a to be moved as well. In such a case, independent alignment may still be possible by, e.g., further movement of the upper pipe die head 515a with respect to lower pipe die head 515b.

Pipe die heads 515 may each comprise: a die cylinder 572 and a die base 571 configured to support die cylinder 572. Die stand 516 may comprise: a frame comprising a first support structure 581 and a second support structure 582; and one or more sub-stands 583, 593. Each sub-stand 583, 593 may be configured to support a die base 571 of its respective pipe die head 515 by first and second base plates 587, 597, and to align the pipe die head 515 with its respective mold block cavity by use of, e.g., one or more actuation stages. For example, as illustrated, first sub-stand 583 may comprise first stage 584, and second sub-stand 593 may comprise second stage 594. Further, first sub-stand 583 may comprise third stage 585 and second sub-stand 593 may comprise fourth stage 595. The stages may be supported on base plates 587, 597, respectively. Each stage may comprise at least one actuator configured to move its respective pipe die head 515 in at least one degree of freedom. For example, first stage 584 may comprise first actuator 586 configured to move the first pipe die head 515a in a first degree of freedom, and second stage 594 may comprise second actuator 596 configured to move the second pipe die head 515b in a second degree of freedom. Actuators may comprise, e.g., mechanical, electrical, hydraulic, or other suitable devices for moving a stage in at least one degree of freedom. For example, the actuators may comprise a mechanical pivot about which the first stage 584 may be rotated using adjustment screws (not shown). In some embodiments, third stage 585 may comprise a third actuator (not shown) configured to move first pipe die head 515a in a third degree of freedom, and fourth stage 595 may comprise a fourth actuator (not shown) configured to move second pipe die head 515b in a fourth degree of freedom.

Movement of each pipe die head 515 may be described in a coordinate frame using a pipe die head longitudinal axis (such as, e.g., a longitudinal axis of the die cylinder 572) as a reference axis Y. This is schematically illustrated with respect to a front view of a die cylinder 572 at the top left corner of **Fig. 5****.** In this view, the Y-axis is coming directly out of the page. An X-axis may be perpendicular to the Y-axis. For example, the X-axis may be horizontal, i.e., parallel to the floor of an installation space or to a platform 582, at least in a nominal untilted orientation of stages 584 and 585 (or 594 and 595). A Z axis may be perpendicular to the X and Y axes. For example, the Z axis may be vertical when the X axis is horizontal. For example, upper pipe die head 515a may be described with respect to coordinate frame Xₐ, Yₐ, Zₐ, and lower pipe die head 515b may be described with respect to coordinate frame X_{b}, Y_{b}, Z_{b}. For brevity, discussion in some cases may be limited to a single pipe die head 515 or a single set of axes X-Y-Z. However, it should be understood that each pipe die head 515 may be aligned according to its own independent coordinate frame due to the fact that the reference axes of upper and lower pipe die heads 515a and 515b may not be fixed with respect to each other.

In first sub-stand 583, first stage 584 may be configured to move upper pipe die head 515a in a first degree of freedom by first actuator 586. For example, in some embodiments the first degree of freedom may comprise a rotation about a first axis (such as, e.g., the Xₐ-axis). Third stage 585 may be configured to move upper pipe die head 515a in the third degree of freedom by the third actuator. For example, the third degree of freedom may comprise a rotation about a third axis (such as, e.g., the Zₐ-axis). As shown, one of first stage 584 and third stage 585 may be stacked on top of, or otherwise supported by, the other of first stage 584 and third stage 585. Thus, in some embodiments, third stage 585 may move upper pipe die head 515a by moving first stage 584. In some embodiments, first sub-stand 583 may be configured to move upper pipe die head 515a in alternative or additional degrees of freedom, such as by translation along the Xₐ, Yₐ, or Zₐ-axis, or rotation about the Yₐ-axis. Further, one or more stages in the first sub-stand may be configured to move in more than one degree of freedom. By way of example only, first stage 583 may be configured for both translation along, and rotation about, the Xₐ-axis.

Second stage 594 and fourth stage 595 may be configured to move the second pipe die head 515b in second and fourth degrees of freedom, respectively, which may be similar to the description of the first and third degrees of freedom above. Further, second sub-stand 593 may also be configured to move in the alternative or additional degrees of freedom discussed above with respect to first sub-stand 583. Also, it should be understood that the first and second sub-stands 583 and 593 may not necessarily be identical or comprise the same number or design of stages.

In some embodiments, first sub-stand 583 and second sub-stand 593 may be separately supported on first and second support structures 581 582 of the frame, such as via first and second base plates 587, 597. This placement may serve to decouple the movement of upper pipe die head 515a from the lower pipe die head 515b.

In some embodiments, first sub-stand 583 may be supported on, e.g., lower die base 571b. In such a case, movement of the upper and lower pipe die heads 515a and 515b may be coupled to each other because movement of lower die base 571b would cause movement of first sub-stand 583. However, first sub-stand 583 and second sub-stand 593 may nevertheless be capable of independent alignment of upper and lower pipe die heads 515a and 515b. Further, this arrangement may offer advantages over the configuration illustrated in **Fig. 5****.** For example, the size of stand 516 may be reduced by, e.g., modifying or eliminating platform first or second support structures 581 or 582. This reduced size may allow for closer placement of upper and lower pipe die heads 515a and 515b, which may allow for greater adaptability with existing single pipe manufacturing cells.

Additionally, by coupling the motion of the two sub-stands, it may be possible to eliminate redundant stages or actuators. For example, if it is determined that alignment tolerances will allow uniform movement of all pipe die heads in at least one degree of freedom, then it may be sufficient to perform alignment in that degree of freedom for all pipe die heads using a single stage located in, e.g., second sub-stand 593. Alternatively, or additionally, it may be possible to use a single stage for coarse alignment in the at least one degree of freedom and provide smaller actuators for fine independent alignment of at least one of the upper pipe die head 515a or the lower pipe die head 515b.

By providing a double pipe die stand 516 according to embodiments of the present disclosure, the pipe die heads may be independently and accurately aligned to ensure sufficient quality control in all corrugated pipe strands of a multi-pipe manufacturing cell.

**Fig. 6** is a process flowchart illustrating an example of a pipe manufacturing method 600, consistent with embodiments of the present disclosure. Method 600 may be performed using any of the embodiments discussed above.

At step 601, a single corrugated pipe may be produced on a pipe manufacturing cell. For example, the pipe may be a large double-walled pipe having a diameter of, e.g., 30 inches or more. The pipe manufacturing cell may comprise a plurality of single-pipe mold blocks. In some embodiments, the pipe manufacturing cell may be configured as a conventional single pipe manufacturing cell. In some embodiments, components of the single pipe manufacturing cell may be optimized to perform in both single and multi-pipe manufacturing modes.

At steps 602-606, production of the single corrugated pipe may cease, and the manufacturing cell may be converted for use as a multi-pipe manufacturing cell. For example, at step 602, the single pipe mold blocks may be replaced with any of the multi-pipe mold blocks described above. At step 603, a single pipe die head may be removed. At step 604, a single die stand may be converted to, or replaced with, a multi-pipe die stand. For example, the multi-pipe die stand according to **Fig. 6** may be set up and aligned with the cavities of the multi-pipe mold blocks as discussed above. At step 605, dual pipe die heads may be installed on the multi-pipe die stand. At step 606, an extrusion system may be converted for multi-pipe use. For example, a number or type of extruders may be changed, or a new or pre-existing extruder may be configured with flow dividers or flow regulating mechanisms such as melt pumps, as described above.

At step 607, the modified pipe manufacturing cell may be used to produce multiple corrugated pipes simultaneously. For example, the modified pipe manufacturing cell may be used to simultaneously produce two pipes of a smaller diameter than the single pipe that was produced at step 601.

In some embodiments, method 600 may comprise further steps of reverting back to the original single pipe configuration and producing a single corrugated pipe again, as shown at steps 608-613.

It should be understood that the disclosed steps of method 600 need not be performed in the precise order described above. For example, in some embodiments, steps 602-606 may be performed in any order or concurrently, and the same may be true for steps 608-612. Further, the method 600 may alternatively begin with a multi-pipe configuration and transition to a single pipe configuration.

Embodiments of the present disclosure may further be described with respect to the following clauses:
1. A pipe manufacturing cell, comprising:
   an extrusion system;
   a corrugator comprising a plurality of multi-pipe mold blocks, each multi-pipe mold block comprising a first cavity having a first corrugated molding surface and a second cavity having a second corrugated molding surface;
   a first pipe die head coupled to the extrusion system and configured to provide a first flow of pipe material to the first cavities of the plurality of multi-pipe mold blocks; and
   a second pipe die head coupled to the extrusion system and configured to provide a second flow of pipe material to the second cavities of the plurality of multi-pipe mold blocks,
   wherein the first pipe die head and the second pipe die head are configured to provide the first and second flows of pipe material simultaneously.
2. The pipe manufacturing cell of clause 1, wherein the extrusion system comprises:
   a first extruder configured to provide the first flow of pipe material to the first pipe die head; and
   a second extruder configured to provide the second flow of pipe material to the second pipe die head.
3. The pipe manufacturing cell of clause 2, wherein:
   the first extruder is configured to provide a third flow of pipe material to the second pipe die head; and
   the second extruder is configured to provide a fourth flow of pipe material to the first pipe die head.
4. The pipe manufacturing cell of clause 3, further comprising:
   a first flow regulating mechanism configured to regulate the first flow of pipe material from the first extruder to the first pipe die head;
   a second flow regulating mechanism configured to regulate the second flow of pipe material from the second extruder to the second pipe die head;
   a third flow regulating mechanism configured to regulate the third flow of pipe material from the first extruder to the second pipe die head; and
   a fourth flow regulating mechanism configured to regulate the fourth flow of pipe material from the second extruder to the first pipe die head.
5. The pipe manufacturing cell of clause 4, wherein one of the first, second, third and fourth flow regulating mechanisms comprises a melt pump.
6. The pipe manufacturing cell of clause 4, wherein each of the first, second, third and fourth flow regulating mechanisms comprises a melt pump.
7. The pipe manufacturing cell of any one of clauses 3 to 6, further comprising:
   a first flow divider configured to divide an output of the first extruder into the first flow of pipe material and the third flow of pipe material; and
   a second flow divider configured to divide an output of the second extruder into the second flow of pipe material and the fourth flow of pipe material.
8. The pipe manufacturing cell of clause 2, wherein:
   the first extruder is configured to provide a third flow of pipe material to the first pipe die head; and
   the second extruder is configured to provide a fourth flow of pipe material to the second pipe die head.
9. The pipe manufacturing cell of clause 2, wherein the extrusion system further comprises:
   a third extruder configured to provide a third flow of pipe material to the first pipe die head; and
   a fourth extruder configured to provide a fourth flow of pipe material to the second pipe die head.
10. The pipe manufacturing cell of any one of clauses 1 to 9, further comprising:
   a first flow regulating mechanism arranged between the extrusion system and the first pipe die head; and
   a second flow regulating mechanism arranged between the extrusion system and the second pipe die head.
11. The pipe manufacturing cell of clause 10, wherein the first flow regulating mechanism or the second flow regulating mechanism comprises a melt pump.
12. The pipe manufacturing cell of any one of clauses 1 to 11, wherein within each multi-pipe mold block, the first cavity comprises a same diameter as the second cavity.
13. The pipe manufacturing cell of any one of clauses 1 to 11, wherein within each multi-pipe mold block, the first cavity comprises a larger diameter than the second cavity.
14. The pipe manufacturing cell of any one of clauses 1 to 13, wherein each multi-pipe mold block comprises a third cavity having a third corrugated molding surface.
15. The pipe manufacturing cell of any one of clauses 1 to 14, further comprising:
   a plurality of common block carriers,
   wherein each multi-pipe mold block is configured to be installed in one of the plurality of common block carriers.
16. The pipe manufacturing cell of any one of clauses 1 to 15, wherein each of plurality of multi-pipe mold blocks is removable.
17. The pipe manufacturing cell of any one of clauses 1 to 16, comprising: a conveyance system configured to revolve the multi-pipe mold blocks in a loop.
18. The pipe manufacturing cell of any one of clauses 1 to 17, further comprising:
   a die stand configured to:
   align the first pipe die head with the first cavities of the plurality of multi-pipe mold blocks;
   align the second pipe die head with the second cavities of the plurality of multi-pipe mold blocks; and
   perform relative movement between the first pipe die head and the second pipe die head.
19. The pipe manufacturing cell of clause 18, wherein the die stand further comprises:
   a first sub-stand configured to support the first pipe die head, the first sub-stand comprising a first stage configured to move the first pipe die head in a first degree of freedom; and
   a second sub-stand configured to support the second pipe die head, the second sub-stand comprising a second stage configured to move the second pipe die head in a second degree of freedom.
20. The pipe manufacturing cell of clause 19, wherein:
   the first sub-stand comprises a third stage configured to move the first pipe die head in a third degree of freedom different from the first degree of freedom; and
   the second sub-stand comprises a fourth stage configured to move the second pipe die head in a fourth degree of freedom different from the second degree of freedom.
21. The pipe manufacturing cell of clause 19 or 20, wherein:
   the first degree of freedom comprises a rotation about a first axis that is perpendicular to a longitudinal axis of the first pipe die head; and
   the second degree of freedom comprises a rotation about a second axis that is perpendicular to a longitudinal axis of the second pipe die head.
22. The pipe manufacturing cell of clause 19 or 20, wherein:
   the first degree of freedom comprises a translation along a first axis that is perpendicular to a longitudinal axis of the first pipe die head; and
   the second degree of freedom comprises a translation along a second axis that is perpendicular to a longitudinal axis of the second pipe die head.
23. The pipe manufacturing cell of any one of clauses 19 to 22, wherein the die stand further comprises:
   a frame configured to support at least one of the first sub-stand or the second sub-stand.
24. A pipe manufacturing method, comprising:
   providing a flow of pipe material from an extrusion system to a corrugator, the corrugator comprising a plurality of single-pipe mold blocks, each of the plurality of single-pipe mold blocks comprising a corrugated mold surface,
   corrugating a pipe by the corrugator using the plurality of single-pipe mold blocks;
   replacing the plurality of single-pipe mold blocks with a plurality of multi-pipe mold blocks in the corrugator, each of the plurality of multi-pipe mold blocks comprising a plurality of corrugated mold surfaces;
   modifying the extrusion system to divide the flow of pipe material;
   providing the divided flow of pipe material to the plurality of corrugated mold surfaces of the multi-pipe mold blocks; and
   corrugating a plurality of pipes by the corrugator using the plurality of multi-pipe mold blocks.
25. A pipe manufacturing method, comprising:
   providing a divided flow of pipe material from an extrusion system to a corrugator, the corrugator comprising a plurality of multi-pipe mold blocks, each of the plurality of multi-pipe mold blocks comprising a plurality of corrugated mold surfaces, and
   corrugating a plurality of pipes by the corrugator using the plurality of multi-pipe mold blocks.

The foregoing description has been presented for purposes of illustration. It is not exhaustive and does not limit the invention to the precise forms or embodiments disclosed. Modifications and adaptations of the invention will be apparent to those skilled in the art from consideration of the specification and practice of the disclosed embodiments of the inventions disclosed herein.

## Claims

1. A pipe manufacturing cell (200), comprising:
an extrusion system (210);
a corrugator (220) comprising a plurality of multi-pipe mold blocks (221), each multi-pipe mold block comprising a first cavity having a first corrugated molding surface and a second cavity having a second corrugated molding surface;
a first pipe die head (215a) coupled to the extrusion system and configured to provide a first flow of pipe material to the first cavities of the plurality of multi-pipe mold blocks; and
a second pipe die head (215b) coupled to the extrusion system and configured to provide a second flow of pipe material to the second cavities of the plurality of multi-pipe mold blocks,
wherein the first pipe die head and the second pipe die head are configured to provide the first and second flows of pipe material simultaneously,
wherein the extrusion system comprises:
a first extruder configured to provide the first flow of pipe material to the first pipe die head and is further configured to provide a third flow of pipe material to the first pipe die head; and
a second extruder configured to provide the second flow of pipe material to the second pipe die head is further configured to provide a fourth flow of pipe material to the second pipe die head.

2. The pipe manufacturing cell of claim 1, further comprising:
a first flow regulating mechanism (213) arranged between the extrusion system and the first pipe die head; and
a second flow regulating mechanism (213) arranged between the extrusion system and the second pipe die head.

3. The pipe manufacturing cell of claim 2,
wherein the first flow regulating mechanism comprises a melt pump.

4. The pipe manufacturing cell of claim 2 or 3,
wherein the second flow regulating mechanism comprises a melt pump.

5. The pipe manufacturing cell of any one of claims 1 to 4,
wherein within each multi-pipe mold block, the first cavity comprises a same diameter as the second cavity.

6. The pipe manufacturing cell of any one of claims 1 to 4,
wherein within each multi-pipe mold block, the first cavity comprises a larger diameter than the second cavity.

7. The pipe manufacturing cell of any one of claims 1 to 6,
wherein each multi-pipe mold block comprises a third cavity having a third corrugated molding surface.

8. The pipe manufacturing cell of any one of claims 1 to 7, further comprising:
a plurality of common block carriers (429),
wherein each multi-pipe mold block is configured to be installed in one of the plurality of common block carriers.

9. The pipe manufacturing cell of any one of claims 1 to 8,
wherein each of plurality of multi-pipe mold blocks is removable.

10. The pipe manufacturing cell of any one of claims 1 to 9, comprising:
a conveyance system (222) configured to revolve the multi-pipe mold blocks in a loop.

11. The pipe manufacturing cell of any one of claims 1 to 10, comprising:
a die stand (216, 316,516) configured to support the first pipe die head (215a) and the second pipe die head (215b).

12. The pipe manufacturing cell of claim 11, wherein the die stand (216, 316,516) is further configured to independently align the first pipe die head (215a) and the second die head (215b) respectively with the first cavities of the plurality of multi-pipe mold blocks and with the second cavities of the plurality of multi-pipe mold blocks.
